# FASCICULE DE BREVET EUROPEEN

(11) **EP 0 642 285 B1**
(45) Date de publication et mention de la délivrance du brevet: **25.11.1998**
(21) Numéro de dépôt: 94401946.2
(22) Date de dépôt: 01.09.1994
(51) Int. Cl.: H04Q 7/30

(54) **Procédé de partage de canaux par vol d'intervalles de temps contrôlé dans un système de radiocommunications multiplexées, terminal et infrastructure correspondants**
Kanalaufteilungsverfahren durch kontrollierten Zeitschlitzdiebstahl in einem gemultiplexten Funkkommunikationssystem, sowie entsprechendes Endgerät und Infrastruktur
Channel sharing method using controlled time slot stealing in a multiplexed radio communication system, terminal and infrastructure therefor

(30) Priorité: 06.09.1993 FR 9310567
(43) Date de publication de la demande: 08.03.1995
(73) Titulaire: ALCATEL ALSTHOM COMPAGNIE GENERALE D'ELECTRICITE, 75008 Paris (FR)
(72) Inventeur: Delprat, Marc, F-78150 Le Chesnay (FR)
(74) Mandataire: Fournier, Michel

(56) Documents cités:
- EP-A- 0 171 596
- WO-A-91/02436
- ELECTRONICS LETTERS vol. 24, no. 11, 26 Mai 1988, UK, pages 670 - 672 WONG ET AL. 'Blank and burst transmision of data over active speech channels'
- STEELE ET AL. 'Mobile Radio Communications' 1992 , PENTECH PRESS , LONDON * page 752, alinéa 8.9.3 - page 756, alinéa 8.9.5 * * page 707, alinéa 8.5 - page 714, alinéa 8.5.2 *

## Description

Le domaine de l'invention est celui des radiocommunications de données multiplexées, et plus particulièrement bien que non exclusivement, en mode AMRT (Accès Multiple à Répartition dans le Temps).

L'invention trouve une application avantageuse dans les systèmes de radiocommunication cellulaire avec des stations mobiles, tels que ceux conçus selon le standard de radiotélécommunication public GSM (Group Special Mobile). L'invention a toutefois été plus particulièrement développée pour le standard TETRA (Trans European Trunk Radio System) de radiocommunication professionnelle avec les mobiles (en anglais, PMR : Professional Mobile Radio) destiné par exemple aux réseaux utilisés par les services de pompier, de police, de taxi, etc....

Dans ce type de système, les communications en mode établi (stable), sont acheminées sur des canaux de trafic (TCH, pour Traffic CHannel). Chaque canal de trafic se voit allouer une fréquence de transmission (voire un jeu de plusieurs fréquences en GSM, où un principe de saut de fréquence a été retenu). Une même fréquence de trafic est partagée en plusieurs TCH par multiplexage temporel entre plusieurs stations mobiles (typiquement 4 dans le standard TETRA, ou 8 actuellement dans le GSM). Chaque station mobile communique sur un des intervalles de temps du multiplex.

Chaque communication est susceptible d'acheminer des signaux de parole (phonie) codés numériquement à bas débit (inférieur à 16 kbits/s) généralement organisés en "trames", ou des données proprement dites, qu'elles soient en mode circuit (émission continue), ou en mode paquet (en connection continue ou par paquets à en-tête avec adresse). Les communications en phonie sont acheminées soit en duplex, soit à l'alternat. Dans ce dernier cas, en général, le mobile doit actionner une touche "appel alternat" pour activer la voie montante (c'est-à-dire depuis le terminal mobile vers l'infractucture de radiocommunication) à la place de la voie descendante.

Dans un système tel que TETRA, une communication se voit attribuer un intervalle de temps d'une fréquence montante et d'une fréquence descendante pendant toute la durée d'un appel (message trunking), ou pendant la durée d'un alternat (transmission trunking).

Or, il peut arriver qu'on souhaite excéder temporairement le débit de transmission possible sur un canal de trafic.

Il peut ainsi être nécessaire de faire passer par exemple des informations de signalisation, relatives à la gestion du canal de trafic en question. Les informations de signalisation sont par exemple des instructions ou des paramètres liés au fonctionnement du réseau.

Une première façon connue de résoudre ce problème consiste à augmenter le nombre d'intervalles de temps alloués à l'application. Cette technique n'est toutefois pas optimale, dans la mesure où les sources d'information secondaire sont à émission intermittente et aléatoire, et que les canaux supplémentaires réservés seraient très sous-utilisés.

Une autre manière connue de résoudre ce problème, mise en oeuvre dans le GSM notamment pour permettre le service de transmission de données de signalisation, consiste à utiliser une technique de "vol de trame", c'est-à-dire en remplaçant une trame de parole ou de données par un message de signalisation. Les messages de signalisation sont précédés par un drapeau ("stealing flag"), et le récepteur possède le moyen de repérer la présence d'un tel drapeau, et donc de reconnaître que la trame reçue contient de la signalisation. Il peut alors d'une part exécuter les opérations impliquées par le message de signalisation, et d'autre part "reconstituer" la trame de trafic manquante de manière appropriée suivant qu'il s'agit de phonie ou de données.

Toutefois, cette technique présente également plusieurs inconvénients.

Tout d'abord, le vol de trame est réalisé habituellement de façon arbitraire, c'est-à-dire autoritairement et sans discrimination au fur et à mesure des besoins. Il en résulte une influence néfaste sur la qualité de transmission des informations de trafic.

D'autre part, le vol de trame est limité actuellement à l'usage de la signalisation associée, à cause de la dégradation de qualité qu'il provoque. Pourtant, cette technique pourrait être appliquée à d'autres services.

Par ailleurs, il est prévu dans la demande de brevet international WO 91/02436 la transmission de données de signalisation dans un canal de trafic établi dès lors qu'une cessation temporaire d'activité est détectée dans ledit canal. En outre, ce document prévoit, en réponse à la réception d'un message de signalisation, le déclenchement d'une temporisation établissant une durée maximale à l'expiration de laquelle le message doit être transmis. Cette temporisation est fonction du niveau d'urgence du message. Si une durée de temporisation s'est écoulée et qu'aucune cessation d'activité n'a été détectée dans le canal de trafic, le message est alors transmis en perturbant le signal de parole/données véhiculé dans le canal.
Ce document prévoit donc uniquement deux niveaux d'importance informative relatifs au canal de trafic (transmission de signal/ cessation de transmission de signal), et suggère d'associer à chaque message de signalisation à transmettre une temporisation qui est fonction de l'urgence du message à transmettre. Les mécanismes de temporisation décrits permettent de définir un délai maximum, pouvant être nûl, prédéterminé ou infini, à l'expiration duquel la transmission dudit message de signalisation devra être opérée. En supposant que l'on définisse plus de deux niveaux d'importance informative pour le signal transmis dans le canal de trafic, l'un de ces niveaux est sans objet dans le cadre de ce document car l'on se limite à associer initialement à chaque message de signalisation une temporisation qui définit implicitement uniquement deux niveaux d'importance informative (temporisation nûlle et temporisation infinie). En effet, ce document ne prévoit pas, en outre, une quelconque comparaison au cours du temps des niveaux d'importance informative respectifs des signal de parole/données et message de signalisation.

L'article "Blank and burst transmission of data over active speech channels" de WONG et al. paru dans Electronics Letters, vol.24, n°11, 26 mai 1988, décrit un procédé de classification de segments de parole selon qu'ils peuvent être omis ou pas en transmission sans perturber le signal de parole qui les contient. Le document vise la transmission de données dans un canal de trafic véhiculant un signal de parole. Ce procédé se base sur la mesure d'un Rapport Signal/Bruit de Reconstitution de Segment.

L'invention a pour objectif de pallier ces inconvénients de la technique antérieure.

Plus précisément, un premier objectif de l'invention est de fournir un procédé permettant l'insertion de données excédentaires sur un canal de trafic d'un système de radiocommunication avec des mobiles en optimisant la dégradation de la qualité de transmission qui en résulte.

Un objectif complémentaire de l'invention est de fournir un procédé permettant d'offrir des services de partage intelligent des canaux de trafic, notamment dans le cadre d'un service de transmission "simultanée" voix/données permettant de superposer des données à la phonie de façon quasi-transparente. Ainsi par exemple, lorsqu'un circuit de phonie est établi entre deux ou plusieurs utilisateurs, on peut simultanément envoyer des blocs de données au(x) même(s) utlisateur(s) que la phonie (ex: transmission de données par paquets en mode connexion), voire à d'autres destinataires (si les blocs comportent une adresse de destination).

Un autre objectif de l'invention est d'être compatible avec une organisation de gestion de priorité entre les différentes données à transmettre.

Ces objectifs, ainsi que d'autres qui apparaîtront par la suite, sont atteints selon l'invention à l'aide d'un procédé procédé d'émission de données dans un système de radiocommunication numérique, dans lequel les communications forment des sources principales de données et sont transmises sous forme de trains de données entre des stations terminales d'une part et une infrastructure d'autre part, à travers des canaux de trafic, lesdits trains de données étant constitués d'une succession de blocs de données, procédé du type destiné à acheminer des données provenant d'une source secondaire de données dans un canal de trafic affecté à une source principale de données,
caractérisé en ce que chacun desdits blocs transmis par la source principale d'une part, et les données de ladite source secondaire de données d'autre part, sont chacun définis par l'un d'au moins trois niveaux d'importance informative, et des données de la source secondaire sont substituées à un bloc transmis par la source principale en résultat d'une comparaison entre les niveaux respectifs d'importance informative desdites données de la source secondaire et bloc de la source principale.

L'invention fournit ainsi un procédé de "vol de trame amélioré" consistant à réaliser la substitution intelligente de données secondaires à occurrence intermittente, aux données principales de trafic émises sur un canal de trafic d'un système de radiocommunication avec des mobiles.

Dans l'application préférentielle de l'invention, ledit multiplex des canaux de trafic est un multiplex temporel dans lequel chaque communication se voit attribuer un intervalle de temps déterminé, chaque intervalle de temps pouvant acheminer un nombre entier de blocs de données. Mais on peut aussi concevoir que le multiplexage utilisé soit un multiplexage fréquentiel, ou tout autre multiplexage, dès lors que les données transmises sont organisées en blocs de données successifs.

Dans le cas où la source principale de données comprend des signaux de parole, les moyens de détection de niveau d'importance informative peuvent comprendre un détecteur d'activité vocale (détectant les périodes de silence du signal de parole) par exemple du type tels que décrits dans la norme GSM 06.32. Un vol de trame dans un bloc de silence ainsi détecté ne provoque pratiquement pas de dégradation. On pourra également utiliser un analyseur des zones de stationnarité du signal de parole, du type fonctionnant par mesure de "distance spectrale". Un vol de trame ne provoquera dans ce cas qu'une dégradation minime.

Dans le cas où la source principale de données comprend des données sporadiques, ou à contenu informatif intermittent, les moyens de détection de niveau d'importance informative sont constitués avantageusement par un détecteur de pauses de transmission, ou tout autre analyseur adéquat.

Dans le cas où les communications sont acheminées en multiplex temporel, et où chaque intervalle de temps est décomposé temporellement en au moins deux blocs de transmission successifs, lesdites opérations de détection de niveau d'importance informative sont avantageusement effectuées sélectivement bloc à bloc. En outre, de façon préférentielle, lesdites opérations de substitution sélective de données secondaires à des données primaires sont également effectuées sélectivement bloc à bloc en fonction de ladite information de niveau d'importance informative.

Avantageusement, les données fournies par ladite source secondaire de données sont stockées dans une mémoire tampon de type FIFO, avant d'être émises bloc à bloc.

Selon une variante avantageuse, il est affecté un temps maximal d'attente à au moins certaines des données secondaires stockées, et lesdites données secondaires sont émises préférentiellement lors de la détection du niveau d'activité le plus bas tant que ledit temps maximal d'attente n'est pas dépassé, l'émission desdites données étant immédiatement effectuée à la place des données principales quelque soit leur niveau instantané d'activité dès lors que ledit temps maximal d'attente est écoulé.

Lesdites données secondaires peuvent correspondre par exemple :
- à un service de transmission de données destiné à émettre des messages de taille fixe faible, généralement un intervalle de temps au plus, et contenant intrinséquement l'adresse du destinaire de façon explicite ou implicite ;
- à un service de transmission de données par paquets destiné à être couplé à un service de phonie dans le cadre d'un service global de transmission voix/données "simultanée" (Concurrent Voice and Data Call).
- à des informations de "signalisation utilisateur" comprenant des informations de chiffrement et/ou de synchronisation.

L'invention à également pour objet un dispositif, c'est-à-dire un terminal ou une infrastructure de système de radiocommunication mettant en oeuvre le procédé ci-dessus. Ce dispositif comprend avantageusement:
- au moins deux source de données définissant chacune au moins trois niveaux d'importance informative, et appartenant à un groupe comprenant des signaux de parole et des signaux de données proprement dites;
- des moyens de détection de niveau d'importance informative associés auxdites sources, et fournissant des niveaux d'importance informative;
- des moyens de contrôle de flux, recevant en entrée lesdits niveaux d'importance informative, et fournissant en sortie un paramètre de choix des données à émettre en fonction de comparaisons entre niveaux d'importance informative respectifs desdites sources; et
- des moyens de sélection à l'émission, connectés auxdites sources, et actionnés par ledit paramètre de choix d'information à émettre, de façon à autoriser sélectivement l'émission des données d'une seule source à la fois.

Dans un mode de réalisation où le terminal ou l'infrastructure comprend d'une part au moins deux sources de signaux ou de données d'application, et d'autre part au moins une source de données système, les moyens de sélection à l'émission actionnés par ledit paramètre de choix d'information à émettre, sont avantageusement répartis sur deux étages :
- un premier étage "application", au sein duquel s'effectue l'autorisation sélective de l'émission des données d'une seule source de signaux ou de données d'application à la fois ;
- un second étage "système", au sein duquel s'effectue l'autorisation sélective de l'émission soit des données de la source sélectionnées au premier étage "application", soit de données systèmes.

D'autres caractéristiques et avantages de l'invention apparaîtront à la lecture de la description suivante de modes de réalisation de l'invention donnés à titre illustratif et non limitatif, et des dessins annexés dans lesquels:
- la figure 1 schématise un réseau de radiocommunication cellulaire du type GSM ou TETRA, dans lequel peut être mis en oeuvre le procédé suivant l'invention.
- la figure 2 illustre la structure d'une trame typique acheminant des canaux de trafic bidirectionnel (TCH) en multiplex temporel.
- la figure 3 représente un modèle fonctionnel d'un terminal de radiocommunication mettant en oeuvre le procédé de l'invention.
- la figure 4 représente un modèle fonctionnel des éléments d'une station de base d'une infrastructure de radiocommunication mettant en oeuvre le procédé de l'invention.

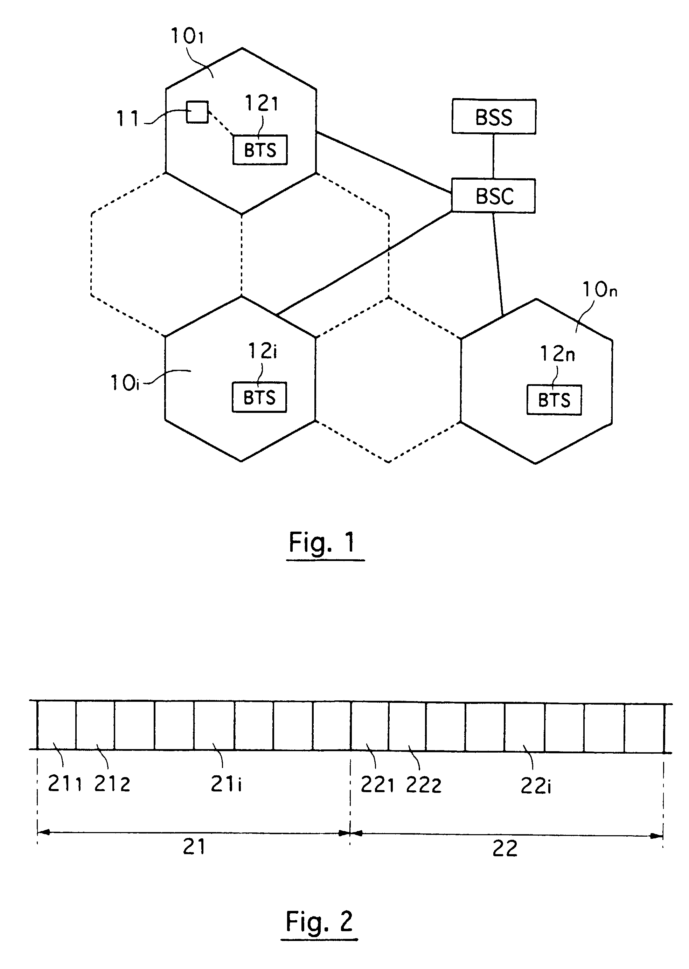

Comme illustré en figure 1, un réseau de radiocommunication cellulaire est constitué d'une pluralité de cellules 10₁, 10ᵢ, 10ₙ préférentiellement adjacentes, couvrant un espace géographique dans lequel peuvent évoluer des stations mobiles 11. Dans l'exemple détaillé ci-après, le réseau de référence sera un réseau de type GSM ou TETRA.

Pour chaque cellule 10ᵢ, les stations mobiles 11 qui s'y trouvent établissent une communication avec une station de base (BTS) 12ᵢ, couvrant ladite cellule 10ᵢ correspondante. Dans un réseau de type GSM (voir notamment pour référence l'ouvrage de M. MOULY et M.B. PAUTET ISBN 2-9507190-0-7 intitulé "The GSM System for Mobile Communications" (le système GSM pour les communications avec des mobiles), ainsi que les spécifications GSM), les stations de base BTS sont sous le contrôle d'une station BSC (Base Station Controller), elles-mêmes supervisées par un module central de commande du réseau BSS (Base Station Subsystem).

Dans le cas de TETRA, l'architecture interne de l'infrastructure n'est pas spécifiée par la norme, mais on appellera tout de même "stations de base" (BTS) les équipements d'émission-réception de l'infrastructure.

Les communications établies entre une station de base 12₁ et une station mobile 11 se trouvant dans la cellule correspondante 10₁ peuvent emprunter plusieurs canaux, à savoir entre autres :
- un canal de trafic bidirectionnel (TCH), qui sert à l'acheminement des informations de l'utilisateur (User Information), sous forme de signaux de paroles ou de données ;
- un canal de signalisation FACCH (Fast Associated Control Channel, pour désigner un Canal de Commande Associé Rapide).

Dans l'exemple illustratif décrit ici, les liaisons sont réalisées en multiplexage temporel. En conséquence, comme représenté en Figure 2, les communications bidirectionnelles sont acheminées dans un multiplex temporel dont les trames successives 21, 22 sont formées d'intervalles de temps 21₁, 21₂,... ; 22₁, 22₂, ... (en Anglais "time slots") contenant chacun au moins un canal de communication.A noter que dans TETRA chaque trame compte 4 intervalles de temps (8 dans GSM).

Il en résulte que chaque communication est acheminée par segments dans un intervalle de temps de même rang 21ᵢ, 22ᵢ, ... sur plusieurs trames 21, 22 du multiplex.

Cependant il faut noter que l'invention est relativement indépendante des caractéristiques de l'interface radio et en particulier elle peut s'appliquer aussi bien à un système FDMA qu'à un système TDMA D'une manière générale, l'invention est applicable à tout système radio où la technique de vol de trames doit être utilisée pour passer de la signalisation associée au canal de trafic ou pour superposer de la transmission de données à la phonie.

La technique connue de "vol de trame" consiste à substituer des données prioritaires soudaines à celles de la communication en cours dans un ou plusieurs intervalles de temps. L'invention peut tout d'abord être utilisée pour améliorer la qualité de service en diminuant les dégradations provoquées habituellement par le vol de trame.

Mais, dans un deuxième temps, cette même technique peut permettre de mettre en oeuvre un véritable partage des canaux de trafic entre les applications de phonie, de transmission de données et les besoins de la signalisation et son utilisation est en particulier envisagée dans TETRA pour réaliser des services du type "messages courts" ou "voix/données simultanées" en superposant les données à la phonie de façon quasi transparente.En effet, du fait des caractéristiques retenues pour les canaux dans les systèmes de radiocommunication cellulaire existants, (selon TETRA, émission en bande étroite à 400 MHz sur des canaux de largeur 25kHz), les débits autorisés de voix ou de parole sont de l'ordre de 4800 bits/s.

Or, on peut avoir besoin d'acheminer des débits plus importants, notamment si on souhaite transmettre des données à haut débit, ou encore émettre simultanément de la voix et des données.

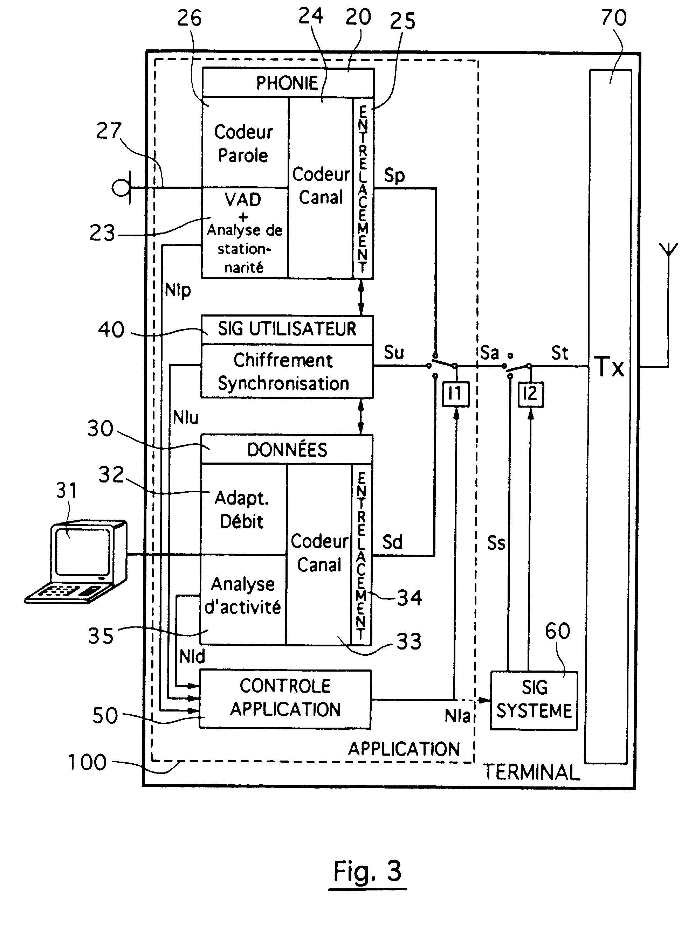

La figure 3 représente un modèle fonctionnel d'un terminal mobile mettant en oeuvre le procédé selon l'invention.

Ce modèle présente plusieurs modules fonctionnels existants également dans les systèmes de l'état de l'art, à savoir :
- un bloc PHONIE 20 qui fournit en sortie un signal de phonie Sₚ. Ce bloc 20 reçoit un signal de parole 27, le numérise et le code avec un codeur de parole bas débit 26. Aprés codage de parole 26, le signal est traité par un codeur de canal 24 qui ajoute de la redondance pour la protection contre les erreurs de transmission, puis le signal est entrelacé 25.
- un bloc DONNÉES 30 qui fournit en sortie un signal de données proprement dites S_{d}. Ce bloc 30 fait l'interface avec un équipement de transmission de données 31 (PC, fax, ...) et réalise les adaptations de débit nécessaires avant de passer le signal au codeur de canal 33 et à l'entrelacement 34.
- un bloc SIG UTILISATEUR 40 qui gère la signalisation de bout-en-bout Sᵤ échangée entre les applications de terminaux distants. Il s'agit de signalisation liée aux besoins de l'utlisateur et qui n'est pas interceptée par le système. On peut citer en particulier les informations concernant le mode de chiffrement et sa synchronisation. Ces informations doivent être envoyées périodiquement (ex: toutes les secondes) pour permettre aux utilisateurs rejoignant un appel de groupe chiffré en cours de communication de pouvoir déchiffrer le signal reçu.
- un bloc SIG SYSTÈME 60 qui gère les informations de signalisation à envoyer pour les besoins de contrôle du système. Ce type de signalisation est destiné à être intercepté et interprété par le système comme comportant des messages de contrôle. On peut citer en particulier les informations échangées avec l'infrastructure lors d'un changement de cellule en cours de communication.
- un bloc d'émission Tx 70 qui reçoit le signal Sₜ à transmettre sur le canal de trafic pour chaque période de transmission et réalise les fonctions de modulation et de transmission radio. Les flux de signal (données binaires) sont représentés en traits épais sur la figure. ns sont générés sous formes de blocs de données de taille régulière appelée ici "période de transmission". Celle-ci correspond normalement à la taille des trames utilisées par le codeur de parole (typiquement 20 à 30 ms). Dans un système tel que TETRA, la période sera probablement de 30 ms (à confirmer car le codeur n'est pas encore choisi définitivement), ce qui correspond au contenu d'un demi "time slot" dans la structure TDMA. Il y aura donc deux trames de parole, ou plus généralement deux blocs de signal, envoyés par time slot.

Dans un système classique fonctionnant en mode phonie, le bloc PHONIE 20 génère des blocs de signal successifs Sₚ(n), Sₚ(n+1), ... Le bloc SIG UTILISATEUR 40 remplace arbitrairement certains de ces blocs de signal par un bloc de signalisation utlisateur Sᵤ(n) sans se préoccuper de l'importance du contenu des blocs de phonie. De même, le bloc SIG SYSTÈME 60 remplace ensuite arbitrairement certains des blocs Sₐ(n) générés par l'application par des blocs Sₛ(n) en fonction des besoins de la signalisation système. Ces "vols de trames" arbitraires ont pour effet de dégrader la qualité de la phonie. Quand au bloc DONNÉES 30, il ne peut pas être actif en même temps que la phonie, ou alors il doit utiliser un autre canal de trafic ce qui augmente l'utilisation des ressources radio et rend plus complexe la réalisation du terminal car celui-ci doit alors gérer plusieurs canaux de trafic simultanément.

Dans un terminal réalisé suivant l'invention, et tel que représenté en figure 3, on identifie un sous-ensemble "APPLICATION" 100 qui contient les blocs fonctionnels PHONIE 20, SIG UTILISATEUR 40, DONNÉES 30 auxquels on a adjoint des fonctionnalités supplémentaires, ainsi qu'un bloc additionnel CONTRÔLE APPLICATION 50. Les éléments additionnels spécifiques à l'invention sont les suivants :
- le bloc PHONIE 20 comporte nouvellement un détecteur d'activité vocale 23 (en anglais : VAD pour "Voice Activity Detector") qui effectue la détection parole/silence et éventuellement l'analyse de la stationnarité du signal. On pourra notamment utiliser un VAD du même type que celui de la norme GSM, décrit dans les rec. GSM 06.31 et 06.32. Le détecteur d'activité vocale 23 peut en particulier s'appuyer sur les paramètres du codeur de parole 26 pour évaluer la stationnarité par une mesure de distance spectrale et pour adapter les seuils d'énergie servant à la détection parole/silence.
- le bloc DONNEES 30 comprend nouvellement un sous bloc "Analyse d'activité" 35 qui détecte la présence ou l'absence de signal utile à transmettre ou reçoit cette information de l'équipement de transmission de données 31, et gère une mémoire tampon contenant les blocs de données à transmettre.
- le bloc CONTRÔLE APPLICATION 50 est spécifique à un terminal réalisé suivant l'invention, et réalise le partage du canal de trafic entre les différents flux de données générés par les trois blocs 20, 30, 40. n reçoit de chacun de ces trois blocs un paramètre NI indiquant le Niveau d'importance informative du bloc à transmettre: NIₚ pour la phonie, NIᵤ pour la signalisation utlisateur et NI_{d} pour les données. En fonction de ces trois paramètres, il décide quel type de signal (phonie / signalisation utilisateur / données) doit être envoyé sur le canal de trafic pour la période de transmission en cours et positionne en conséquence l'interrupteur I1. Il calcule également un paramètres NIₐ indiquant le niveau d'importance du signal transmis par l'application, qu'il envoie au bloc SIG SYSTÈME 60.
- le bloc SIG SYSTEME 60 implémente également une fonction "vol de trames" intelligente particulière à la présente invention: en fonction du paramètre NIₐ et des contraintes propres à la signalisation système, il décide quel type de signal (signal venant de l'application / signalisation système) doit être envoyé sur le canal de trafic pour la période de transmission en cours et positionne en conséquence l'interrupteur I2.

L'élément essentiel de l'invention est que le vol de trame est ici réalisé de façon "intelligente" et non arbitraire. Au niveau du sous-ensemble APPLICATION 100, le partage du canal de trafic est contrôlé par le bloc CONTRÔLE APPLICATION 50 qui détermine le type de signal à envoyer pour chaque période de transmission: Sₐ(n)=Sₚ(n) ou Sₐ(n)=Sᵤ(n) ou Sₐ(n)=S_{d}(n). Ensuite le bloc SIG SYSTÈME 60 détermine, également de façon "intelligente", le bloc de signal à transmettre sur le canal de trafic: Sₜ(n)=Sₐ(n) ou Sₜ(n)=Sₛ(n).

Un terminal ainsi réalisé suivant l'invention fonctionne typiquement de la façon suivante: au cours d'une communication de phonie, les "trous" de parole (périodes de silence) et les zones de stationnarité du signal de parole sont exploités de façon préférentielle pour transmettre de la signalisation utilisateur ou de la signalisation système. Ceci a pour effet de limiter considérablement les dégradations dues au vol de trame. Ce même critère est également utilisé pour transmettre des données si l'utilisateur le souhaite. Les données sont envoyées par l'équipement de transmission de données 31 au terminal avec un contrôle de flux. Le terminal stocke les données dans une mémoire tampon et les transmet ensuite bloc par bloc en volant des trames de phonie dans les zones de silence ou de stabilité du signal de parole.

A titre d'exemple (non limitatif), des modes préférentiels de fonctionnement des blocs CONTRÔLE APPLICATION 50 et SIG SYSTÈME 60 permettant le partage des canaux de trafic vont être détaillés maintenant, ainsi que des exemples précis des critères qui peuvent être utilisés pour contrôler le vol de trames de manière efficace.

### Fonctionnement du bloc CONTRÔLE APPLICATION 50

Le rôle de ce bloc consiste à déterminer quel type de signal (Sₚ, Sᵤ ou S_{d}) doit être envoyé par l'application pour chaque période de transmission et à positionner en conséquence l'interrupteur I1. Il utilise pour celà les paramètres NIₚ, NIᵤ et NI_{d} qui indiquent le niveau d'importance informative du signal émis par les blocs PHONIE 20, SIG UTILISATEUR 40 et DONNÉES 30 respectivement:
- NIₚ aura typiquement 3 niveaux:
   0 dans les zones de silence, bruit de fond et absence de phonie;
   1 dans les zones stables (ou stationnaires) de la parole;
   2 dans les zones de transition ou de variation du signal de parole
- NIᵤ aura typiquement 3 niveaux:
   0 en cas d'absence de signalisation utilisateur à transmettre;
   1 en cas de présence de signalisation utlisateur à transmettre;
   2 en cas de présence de signalisation utlisateur urgente à transmettre.
- NI_{d} aura typiquement 3 niveaux:
   0 en cas d'absence de données à transmettre;
   1 en cas de présence de données à transmettre;
   2 en cas de présence de données urgentes à transmettre.

Le bloc CONTRÔLE APPLICATION 50 utilise alors typiquement les règles suivantes pour gérer une communication de phonie avec de la signalisation utilisateur et des données en attente:
Normalement Sₐ=Sₚ (par défaut on transmet de la phonie);
Si NIᵤ=1 ou 2 et NIₚ=0 ou 1 alors Sₐ=Sᵤ (on s'efforce de transmettre la signalisation pendant les silences ou les zones stables);
Si NI_{d}=1 ou 2 et NIₚ=0 et NIᵤ=0 alors Sₐ=S_{d} (on s'efforce de transmettre les données pendant les silences et les absences de signalisation utlisateur);
Si NI_{d}=2 et NIₚ=1 et NIᵤ=0 alors Sₐ=S_{d} (on peut transmettre des données urgentes pendant les zones stables s'il n'y a pas de signalisation utilisateur);
Si NIᵤ=2 alors Sₐ=Sᵤ (la signalisation utilisateur urgente peut voler des trames de parole importantes, c'est à dire NIₚ=2, mais ce cas reste exceptionnel);
Si NIₚ=1 ou 2 et que la trame est volée (Sₐ=Sᵤ ou Sₐ=S_{d}) alors NIₚ=2 pour les N périodes de transmission suivantes (celà permet d'espacer les vols de trames et donc d'améliorer la qualité, avec typiquement N=5 trames).

Le bloc CONTRÔLE APPLICATION 50 peut également utiliser des informations provenant du bloc SIG SYSTÈME 60:
Si l'on sait que la trame va être volée pour la signalisation système (Sₜ=Sₛ), il est inutile que l'application y place de la signalisation utilisateur ou des données, et donc on laisse Sₐ=Sₚ;
Si une trame de phonie volée par la signalisation système est importante(NIₚ=1 ou 2) alors NIₚ=2 pour les N périodes de transmission suivantes pour les mêmes raisons que ci-dessus.

De plus, le bloc CONTRÔLE APPLICATION 50 calcule pour chaque période de transmission un paramètre NIₐ qui aura typiquement 3 niveaux, à transmettre au bloc SIG SYSTÈME 60, de la façon suivante:
Normalement NIₐ=NIₚ (par défaut);
Si la trame de phonie est volée par l'application pour la signalisation utilisateur ou les données (Sₐ=Sᵤ ou Sₐ=S_{d}) alors NIₐ=2.

### Fonctionnement du bloc SIG SYSTÈME 60

Le rôle du bloc SIG SYSTÈME 60 est de déterminer pour chaque période de transmission le type de signal à transmettre sur le canal de trafic (signal de l'application Sₐ ou signalisation système Sₛ) et de positionner l'interrupteur I2 en conséquence. Il utilise pour celà le paramètre NIₐ et un paramètre interne NIₛ:
- NIₐ est envoyé par le bloc CONTRÔLE APPLICATION 50 et a typiquement 3 niveaux:
   0 si le bloc n'est pas important;
   1 si le bloc est peu important;
   2 si le bloc est important.
- NIₛ aura typiquement 3 niveaux:
   0 si absence de signalisation système;
   1 si présence de signalisation système;
   2 si présence de signalisation système urgente.

Le bloc SIG SYSTÈME 60 détermine alors le type de signal à envoyer sur le canal de trafic à partir de règles prédéfinies tel que ci-dessous:
Normalement Sₜ=Sₐ (par défaut on transmet le signal de l'application)
Si NIₛ=1 ou 2 et NIₐ=0 ou 1 alors Sₜ=Sₛ (on s'efforce de transmettre la signalisation système lorsque le signal de l'application est peu ou pas important);
Si NIₛ=2 alors Sₜ=Sₛ (la signalisation système urgente est toujours transmise immédiatement).

La classification des blocs de signalisation utilisateur, de signalisation système et de données en urgent / non urgent est également possible.Une telle classification peut reposer d'une part sur le degré initial d'urgence du bloc et aussi d'autre part sur le temps d'attente de ce bloc. On peut ainsi envisager qu'un message initialement non urgent devienne urgent s'il n'a pas été envoyé avant un intervalle de temps pré-déterminé. Trois niveaux d'importance informative 0, 1 et 2 peuvent être prévus pour les messages de signalisation ou de données (très urgent, urgent et non urgent), et chaque message peut n'être transmis que dès lors que son niveau d'importance informative est supérieur au niveau d'importance informative du signal de parole exprimé par 3 états 0, 1 et 2 (absence de phonie, zone stable et variation du signal de parole). Bien entendu, l'invention peut également être mise en oeuvre dans le cas simplifié où la communication ne comporte pas de phonie, et où donc seul un service de transmission de données utilise le canal de trafic. En général, la transmission de données n'est effective que de façon sporadique et il est trés rare que les données soit transmises en flux continu pendant une longue période de temps. Un terminal réalisé suivant l'invention transmettra les blocs de signalisation utlisateur ou de signalisation système pendant les pauses de la transmission de données.

Dans une autre variante de l'invention, le procédé pourra être mis en oeuvre pour partager des canaux de trafic non plus dans le sens montant, c'est à dire du terminal vers l'infrastructure (le procédé intervenant alors dans le terminal, comme décrit jusqu'à présent), mais dans le sens descendant de la transmission. En effet l'infrastructure doit également envoyer fréquemment de la signalisation système vers le terminal. Le modèle fonctionnel d'un relais radio suivant l'invention est assez similaire à celui du terminal de la figure 3, mais plus simple car le relais ne comprend pas de sous-ensemble APPLICATION 100. Il reçoit le signal Sₜ envoyé par le terminal émetteur et possède un moyen de reconnaitre s'il s'agit de signalisation système (Sₛ) ou de signal venant de l'application (Sₐ). Ce moyen de distinction peut reposer sur un bit indiquant que la trame est volée (stealing flag) ou sur d'autres caractéristiques de la transmission (TETRA utilise deux séquences d'apprentissage différentes pour distinguer la signalisation système des données de trafic venant de l'application). Aprés désentrelacement et décodage de canal, puis ré-encodage et entrelacement, les blocs de signal St sont ré-émis par le relais vers le(s) terminal(-aux) récepteur(s). Mais certains blocs doivent être remplacés par des blocs de signalisation système destinés au(x) terminal(-aux) récepteur(s). Suivant l'invention, ce vol de trame dans le sens de transmission descendant sera réalisé de façon intelligente sous le contrôle du bloc SIG SYSTÈME de la partie émetteur du relais.

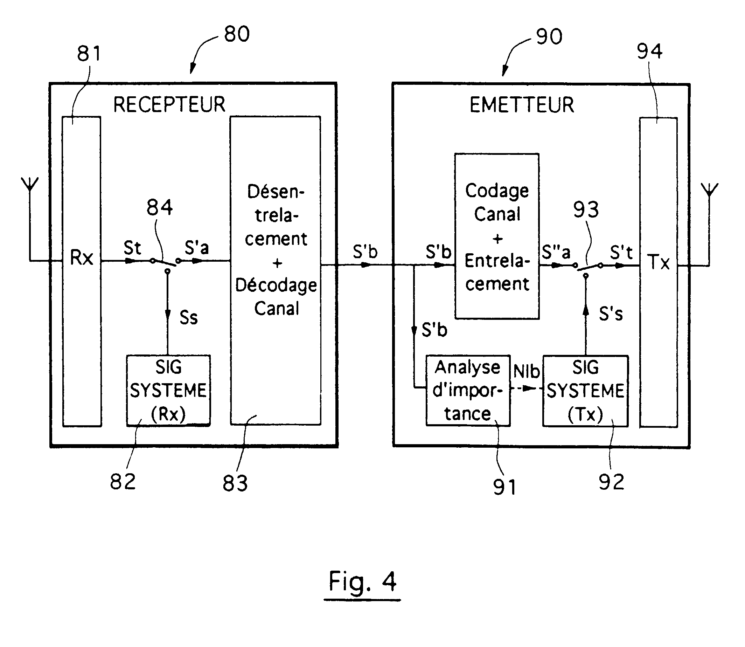

La figure 4 représente les parties récepteur 80 et émetteur 90 d'une station de base dans un tel cas de figure. Dans le cas le plus général, le signal reçu est retransmis, après traitement, dans une cellule différente du réseau (cas d'un réseau pluri-cellulaire) et il s'agit donc de deux stations différentes 80, 90. Lorsque les mobiles sont dans la même cellule, les parties récepteur 80 et émetteur 90 représentées sur la figure appartiennent à la même station de base.

Le signal reçu Sₜ (après traitement par la chaîne de réception radio RX 81) est identique à celui émis par le terminal (voir figure 3) aux erreurs de transmission près. Les blocs de signalisation système sont identifiés et récupérés (84) par le bloc "SIG SYSTEME (RX) 82 qui interprète les commandes reçues et agit en conséquence. Les autres blocs constituent le signal S'ₐ, identique au signal Sₐ du terminal en l'absence de signalisation système et hors de problèmes d'erreurs de transmission. Après désentrelacement et décodage canal 83, on récupère le signal S'_{b}, qui est envoyé à la station de base émettrice 90.

Le signal S'_{b} comporte des blocs de "bourrage" pour boucher les trous occasionnés par la signalisation système dans le sens montant.

De plus, certains blocs du signal S'_{b} peuvent être marqués comme "faux" lorsque la fonction "DECODAGE CANAL" 83 détecte des erreurs dans le bloc (suivant des procédures bien connues).

Dans la station de base émettrice 90, le signal S'_{b} est transmis à un bloc "ANALYSE D'IMPORTANCE" 91 qui va déterminer le niveau d'importance informative de chaque bloc du signal S'_{b}. Pour cela, il faut utiliser (ensemble ou séparément) les critères suivants :
- les blocs de bourrage ("trous" laissés par la signalisation système dans le sens montant) ainsi que les blocs faux ne seront de toutes façons d'aucune utilité au terminal récepteur, et on leur affecte donc le plus faible niveau d'importance informative,
- le signal S'_{b} étant décodé, on peut examiner le contenu de chaque bloc pour en déduire son importance informative (à condition qu'il n'y ait pas de chiffrement). Par exemple, pour un service de phonie, on a accès aux paramètres du codeur et il est donc possible de faire (a posteriori) une détection d'activité vocale, voire une analyse de stabilité, comme dans le bloc phonie du terminal. Plus simplement on peut utiliser une technique analogue à celle du mode de transmission discontinu (DTX) dans le GSM (voir rec GSM 06.12). Dans ce cas, les blocs de silence détectés par le VAD du terminal n'ont pas le même format que les blocs de parole active. Ils contiennent un nombre réduit de paramètres permettant de mettre à jour le bruit de confort généré au récepteur et sont complétés par un champ d'identification.

Ce champ d'identification est constitué d'un certain nombre de bits prenant des valeurs connues (par exemple tous à zéro), choisis de telle façon que cette combinaison soit pratiquement impossible avec de la parole active. Une analyse simple de ce champ permet donc d'identifier les blocs de silence, auxquels on affectera un faible niveau d'importance. Pour les données, il serait également possible d'identifier les blocs vides en les marquant (au niveau du terminal émetteur) par un champ d'identification particulier.

Le bloc "ANALYSE D'IMPORTANCE" 91 utilise donc ces critères pour déterminer un paramètre de niveau d'importance NIb, qu'il transmet au bloc "SIG SYSTEME" 92 pour chaque bloc de données. Le bloc "SIG SYSTEME" 92 utilise alors ce paramètre NIb (ainsi que le degré de priorité de la signalisation système dans le sens descendant S'ₛ) pour commander un interrupteur 93 entre le signal S''ₐ (obtenu à partir de S'_{b} après décodage canal et entrelacement) et le signal S'ₛ. Le signal résultant S'ₜ est alors envoyé à la chaîne de transmission radio Tx 94 pour transmission vers les terminaux destinataires.

## Revendications

1. Procédé d'émission de données dans un système de radiocommunication numérique, dans lequel des communications forment des sources principales de données et sont transmises sous forme de trains de données entre des stations terminales (11) d'une part et une infrastructure (10, 12) d'autre part, à travers des canaux de trafic, lesdits trains de données étant constitués d'une succession de blocs de données,
procédé du type destiné à acheminer des données provenant d'une source secondaire de données dans un canal de trafic affecté à une source principale de données,
caractérisé en ce que chacun desdits blocs transmis par la source principale d'une part, et les données de ladite source secondaire de données d'autre part, sont chacun définis par l'un d'au moins trois niveaux d'importance informative (NIₚ=0,1,ou 2; NIₛ=0,1,ou 2), et des données de la source secondaire sont substituées à un bloc transmis par la source principale en résultat d'une comparaison entre les niveaux respectifs d'importance informative desdites données de la source secondaire et bloc de la source principale.

2. Procédé selon la revendication 1, caractérisé en ce que ladite source principale de données (20) transmet des signaux de parole, et en ce qu'un niveau d'importance informative (NIₚ) définissant un bloc de données est fourni par des moyens de détection de niveau d'importance informative (23) comprenant des détecteurs d'activité vocale détectant les périodes de silence du signal de parole, et des analyseurs des zones de stationnarité du signal de parole.

3. Procédé selon la revendication 1, caractérisé en ce que ladite source principale de données (30, 40) comprend des données à contenu informatif intermittent, et en ce que lesdits moyens de détection de niveau d'importance informative (35) sont constitués par un détecteur de pauses de transmission.

4. Procédé selon l'une quelconques des revendications 1 à 3, caractérisé en ce que ledit multiplex des canaux de trafic est un multiplex temporel dans lequel chaque communication se voit attribuer un intervalle de temps déterminé, et en ce que chaque intervalle de temps peut acheminer un nombre entier de blocs de données.

5. Procédé selon la revendication 4, caractérisé en ce que chaque intervalle de temps est décomposé temporellement en au moins deux blocs de transmission successifs, et en ce que des niveaux d'importance informative sont définis sélectivement bloc à bloc.

6. Procédé selon l'une quelconque des revendications 4 et 5, caractérisé en ce que chaque intervalle de temps est décomposé temporellement en au moins deux blocs de transmission successifs, et en ce que des opérations de substitution de données de source secondaire à des données de source principale sont effectuées sélectivement bloc à bloc.

7. Procédé selon l'une quelconque des revendications 1 à 6, caractérisé en ce que les données fournies par ladite source secondaire de données sont stockées dans une mémoire tampon de type FIFO, avant d'être substituées à un bloc de données de source principale.

8. Procédé selon la revendication 7, caractérisé en ce que l'on affecte un temps maximal d'attente à au moins certaines des données secondaires stockées, l'émission desdites données étant immédiatement effectuée à la place des données de source principale quelque soit le niveau d'importance informative instantané desdites données de source principale dès lors que ledit temps maximal d'attente est écoulé.

9. Procédé selon l'une quelconque des revendications 1 à 8, caractérisé en ce que lesdites données de source secondaire correspondent à un service de transmission de données destiné à émettre des messages de taille fixe faible, généralement un intervalle de temps au plus, et contenant intrinséquement l'adresse du destinaire de façon explicite ou implicite.

10. Procédé selon l'une quelconque des revendications 1 à 9, caractérisé en ce que lesdites données de source secondaire correspondent à un service de transmission de données par paquets destiné à être couplé à un service de phonie dans le cadre d'un service global de transmission voix/données simultanée.

11. Procédé selon l'une quelconque des revendications 1 à 10, caractérisé en ce que lesdites données secondaires (40) sont constituées par des informations de signalisation utilisateur comprenant des informations de chiffrement et/ou de synchronisation.

12. Procédé selon l'une quelconque des revendications 1 à 12, caractérisé en ce qu'il est mis en oeuvre dans un système de radiocommunication conforme au standard TETRA.

13. Dispositif pour la mise en oeuvre du procédé conforme à l'une quelconque des revendication 1 à 12, caractérisé en ce qu'il comprend:
- au moins deux source de données (20, 30, 40) définissant chacune au moins trois niveaux d'importance informative (0, 1, 2), et appartenant à un groupe comprenant des signaux de parole (Sₚ) et des signaux de données proprement dites (Sᵤ, S_{d}) ;
- des moyens (23, 35) de détection de niveau d'importance informative associés auxdites sources, et fournissant des niveaux d'importance informative (NIₚ, NIᵤ,NI_{d}, NIₐ; NI_{b});
- des moyens de contrôle de flux, recevant en entrée lesdits niveaux d'importance informative (NIₚ, NIᵤ,Ni_{d}, NIₐ; NI_{b}) et fournissant en sortie un paramètre de choix des données à émettre en fonction de comparaisons entre niveaux d'importance informative respectifs desdites sources; et
- des moyens de sélection à l'émission (I1, I2 ; 93), connectés auxdites sources, et actionnés par ledit paramètre de choix d'information à émettre, de façon à autoriser sélectivement l'émission des données d'une seule source à la fois (Sₚ,Sᵤ, S_{d}, Sₛ ; S"ₐ ; S'ₛ).

14. Dispositif selon la revendication 13, caractérisé en ce qu'il comprend, d'une part, au moins deux sources (20, 30, 40) de signaux ou de données d'application, et, d'autre part, au moins une source de données système (60),
et en ce que les moyens de sélection à l'émission (I1, 12) actionnés par ledit paramètre de choix des données à émettre, sont répartis sur deux étages qui sont:
- un premier étage (100) au sein duquel s'effectue l'autorisation sélective (Il) de l'émission des données d'une seule source de signaux ou de données d'application (20, 30, 40) à la fois ;
- un second étage, au sein duquel s'effectue l'autorisation sélective (12) de l'émission soit des données (Sₐ) de la source d'application sélectionnées au premier étage, soit de données systèmes (Sₛ).

## Patentansprüche

1. Verfahren zum Aussenden von Daten in einem digitalen Funksystem, bei dem die Kommunikationen Hauptquellen für Daten bilden und in Form von Datensätzen zwischen den Terminalstationen (11) einerseits und einer Infrastruktur (10, 12) anderseits über Verkehrskanäle übertragen werden, wobei die Datensätze aus einer Folge von Datenblöcken bestehen,
wobei das Verfahren von dem Typ ist, der dafür ausgelegt ist, von eine sekundären Datenquelle stammende Daten in einen Verkehrskanal zu leiten, der der Hauptdatenquelle zugewiesen ist,
**dadurch gekennzeichnet,** dass jeder der von der
Hauptquelle übertragenen Datenblöcke einerseits und die Daten der sekundären Datenquelle andererseits jeweils durch eine von wenigstens drei Ebenen der informativen Bedeutung (NIₚ=0, 1 oder 2; NIₛ=0, 1 oder 2) definiert sind, und Daten der sekundären Quelle durch einen von der Hauptquelle als Ergebnis eines Vergleichs zwischen den jeweiligen Ebenen der informativen Bedeutung der Daten der sekundären Quelle und des Blocks der Hauptquelle übertragenen Block ersetzt werden.

2. Verfahren nach Anspruch 1, dadurch gekennzeichnet, dass die Hauptdatenquelle (20) Sprachsignale überträgt und dass eine Ebene (NIₚ) der informativen Bedeutung, die einen Datenblock definiert, von Erfassungsmitteln (23) für die Ebene der informativen Bedeutung geliefert wird, die Detektoren für die Stimmaktivität, die die Stilleperioden des Sprachsignals erfassen, und Analysatoren für Stationaritätsbereiche des Sprachsignals umfassen.

3. Verfahren nach Anspruch 1, dadurch gekennzeichnet, dass die Hauptdatenquelle (30, 40) Daten mit intermittierendem informativem Gehalt umfasst und dass die Erfassungsmittel (35) für die Ebene der informativen Bedeutung aus einem Detektor für Übertragungspausen bestehen.

4. Verfahren nach einem der Ansprüche 1 bis 3, dadurch gekennzeichnet, dass das Multiplex der Verkehrskanäle ein Zeitmultiplex ist, bei dem jede Kommunikation einem bestimmten Zeitintervall zugeordnet wird, und dass jedes Zeitintervall eine Gesamtzahl von Datenblöcken befördern kann.

5. Verfahren nach Anspruch 4, dadurch gekennzeichnet, dass jedes Zeitintervall zeitlich in wenigstens zwei aufeinanderfolgende Übertragungsblöcke zerlegt wird und dass die Ebenen der informativen Bedeutung Block für Block selektiv definiert werden.

6. Verfahren nach einem der Ansprüche 4 und 5, dadurch gekennzeichnet, dass jedes Zeitintervall zeitlich in wenigstens zwei aufeinanderfolgende Übertragungsblöcke zerlegt wird und dass die Vorgänge des Austauschs von Daten der sekundären Quelle durch Daten der Hauptquelle Block für Block selektiv ausgeführt werden.

7. Verfahren nach einem der Ansprüche 1 bis 6, dadurch gekennzeichnet, dass die von der sekundären Datenquelle gelieferten Signale in einem Pufferspeicher vom FIFO-Typ gespeichert werden, bevor sie durch einen Datenblock von der Hauptquelle ausgetauscht werden.

8. Verfahren nach Anspruch 7, dadurch gekennzeichnet, dass man wenigstens einigen der gespeicherten sekundären Daten eine maximale Wartezeit zuordnet, wobei die Aussendung der Daten an Stelle der Daten von der Hauptquelle, egal welche die augenblickliche Ebene der informativen Bedeutung der Daten von der Hauptquelle ist, sofort ausgeführt wird, sobald die maximale Wartezeit verstrichen ist.

9. Verfahren nach einem der Ansprüche 1 bis 8, dadurch gekennzeichnet, dass die Daten der sekundären Quelle einem Datenübertragungsbetrieb entsprechen, der dafür ausgelegt ist, Nachrichten auszusenden, die eine geringe feste Größe, im allgemeinen höchstens ein Zeitintervall, haben und die Adresse des Adressaten explizit oder implizit innenwohnend enthalten.

10. Verfahren nach einem der Ansprüche 1 bis 9, dadurch gekennzeichnet, dass die Daten der sekundären Quelle einem Datenübertragungsbetrieb durch Pakete entsprechen, der dafür ausgelegt ist, mit einem Sprechfunkbetrieb im Rahmen eines Gesamtbetrieb zur gleichzeitigen Stimm/Datenübertragung gekoppelt zu werden.

11. Verfahren nach einem der Ansprüche 1 bis 10, dadurch gekennzeichnet, dass die sekundären Daten (40) aus Benutzer-Signalgebungsinformationen bestehen, die Verschlüsselungs- und/oder Synchronisationsinformationen umfassen.

12. Verfahren nach einem der Ansprüche 1 bis 12, dadurch gekennzeichnet, dass es in einem Funksystem gemäß dem TETRA-Standard ausgeführt wird.

13. Vorrichtung zur Ausführung des Verfahrens nach einem der Ansprüche 1 bis 12, dadurch gekennzeichnet, dass sie umfasst:
- wenigstens zwei Datenquellen (20, 30, 40), die jeweils wenigstens drei Ebenen (0, 1, 2) der informativen Bedeutung definieren und zu einer Gruppe gehören, die Sprachsignale (Sₚ) und eigentliche Datensignale (Sᵤ, S_{d}) umfasst;
- Mittel (23, 35) zur Erfassung der Ebene der informativen Bedeutung, die mit den Quellen verbunden sind und Ebenen (NIₚ, NIᵤ, NI_{d}, NIₐ; NI_{b}) der informativen Bedeutung liefern;
- Mittel zur Steuerung des Flusses, die am Eingang die Ebenen (NIₚ, NIᵤ, NI_{d}, NIₐ; NI_{b}) der informativen Bedeutung empfangen und am Ausgang einen Parameter zur Auswahl der auszusendenden Daten in Abhängigkeit von Vergleichen zwischen den jeweiligen Ebenen der informativen Bedeutung der Quellen liefern; und
- Auswahlmittel (I1, I2; 93) für die Aussendung, die mit den Quellen verbunden sind und durch den Parameter zur Auswahl von auszusendender Information betätigt werden, so dass die Aussendung von Daten einer einzigen Quelle (Sₚ, Sᵤ, S_{d}, Sₛ; S"ₐ; S'ₛ) auf einmal selektiv autorisiert wird.

14. Vorrichtung nach Anspruch 13, dadurch gekennzeichnet, dass sie einerseits wenigstens zwei Quellen (20, 30, 40) für Signale oder Anwendungsdaten und andererseits wenigstens eine Quelle für Systemdaten (60) umfasst, und dass die vom Parameter zur Auswahl der auszusendenden Daten betätigten Auswahlmittel (I1, I2) für die Aussendung auf zwei Stufen verteilt sind, die sind:
- eine erste Stufe (100), in deren Innerem die selektive Autorisierung (I1) der Aussendung von Daten einer einzigen Quelle (20, 30, 40) von Signalen oder Anwendungsdaten auf einmal erfolgt;
- eine zweite Stufe, in deren Innerem die selektive Autorisierung (I2) der Aussendung entweder von in der ersten Stufe ausgewählten Daten (Sₐ) der Anwendungsquelle oder von Systemdaten (Sₛ) erfolgt.

## Claims

1. Method of transmitting data in a digital radio system in which calls form main data sources and are transmitted in the form of data streams between terminal stations (11) and an infrastructure (10, 12) via traffic channels, said data streams being made up of a succession of data blocks,
method of the type adapted to convey data from a secondary data source in a traffic channel assigned to a main data source,
characterized in that each block transmitted by the main source and the data from said secondary data source are each defined by one of at least three levels of relative importance (NIₚ= 0, 1 or 2; NIₛ= 0, 1 or 2), and data from the secondary source is substituted for a block transmitted by the main source as the result of a comparison between the respective relative importance levels of said data from the secondary source and said block from the main source.

2. Method according to claim 1 characterized in that said main data source (20) transmits speech signals and in that a level of relative importance (NIₚ) defining a data block is supplied by relative level of importance detector means (23) comprising vocal activity detectors detecting periods of silence in the speech signal and analyzers for evaluating areas in which the speech signal is stationary.

3. Method according to claim 1 characterized in that said main data source (30, 40) comprises data of intermittent information content and in that said relative level of importance detector means (35) comprise a transmission pause detector.

4. Method according to any one of claims 1 to 3 characterized in that said traffic channel multiplex is a time-division multiplex in which each call is assigned a specific time slot and in that each time slot can convey an integer number of data blocks.

5. Method according to claim 4 characterized in that each time slot is divided into at least two consecutive transmission blocks and in that the relative levels of importance are defined selectively block by block.

6. Method according to claim 4 or claim 5 characterized in that each time slot is divided into at least two consecutive transmission blocks and in that operations to substitute secondary source data for main source data are effected selectively block by block.

7. Method according to any one of claims 1 to 6 characterized in that data supplied by said secondary data source is stored in a FIFO buffer memory before it is substituted for a main source data block.

8. Method according to claim 7 characterized in that a maximum waiting time is assigned to at least some of the stored secondary data, said data being transmitted immediately instead of main source data regardless of the instantaneous level of relative importance of said main source data as soon as said maximal waiting time has elapsed.

9. Method according to any one of claims 1 to 8 characterized in that said secondary source data constitutes a data transmission service adapted to transmit messages with a short fixed size, generally one time slot at most, and containing its destination address explicitly or implicitly.

10. Method according to any one of claims 1 to 9 characterized in that said secondary source data constitutes a data packet transmission service adapted to be connected to a speech service in the context of a concurrent voice/data service.

11. Method according to any one of claims 1 to 10 characterized in that said secondary data (40) comprises user signalling information including encryption and/or synchronization information.

12. Method according to any one of claims 1 to 12 characterized in that it is implemented in a radio communication system to the TETRA standard.

13. Device for implementing the method according to any one of claims 1 to 12 characterized in that it comprises:
- at least two data sources (20, 30, 40) each defining at least three levels of relative importance (0, 1, 2) and belonging to a group comprising speech signals (Sₚ) and data signals (Sᵤ, S_{d});
- relative level of importance detecting means (23, 35) associated with said sources and supplying relative levels of importance (NIₚ, NIᵤ, NI_{d}, NIₐ; NI_{b});
- flow control means receiving at their input said relative levels of importance (NIₚ, NIᵤ, NI_{d}, NIₐ; NI_{b}) and supplying at their output a parameter for choosing the data to be transmitted on the basis of comparison of the respective relative levels of importance of said sources; and
- transmission selection means (I1, I2; 93) connected to said sources and actuated by said information to be transmitted choice parameter to authorize selectively transmission of data from one source at a time (Sₚ, Sᵤ, S_{d}, Sₛ; S"ₐ; S'ₛ).

14. Device according to claim 13 characterized in that it comprises at least two sources of signals or application data (20, 30, 40) and at least one source of system data (60), and in that the transmission selection means (I1, I2) actuated by said data to be transmitted choice parameter are divided into two stages:
- a first stage (100) within which transmission of data from only one source of signals or application data (20, 30, 40) at a time is selectively authorized (I1);
- a second stage in which transmission of data from the application source (Sₐ) selected in the first stage or system data (Sₛ) is selectively authorized (I2).
